# EUROPEAN PATENT APPLICATION

(11) **EP 4 621 754 A1**
(43) Date of publication of application: **24.09.2025**
(21) Application number: 24747305.1
(22) Date of filing: 23.01.2024
(51) Int. Cl.: G08G 3/00, G08G 5/00

(54) **SHIP-LANDING EVALUATION DISPLAY SYSTEM AND SHIP-LANDING EVALUATION DISPLAY METHOD**

(30) Priority: 23.01.2023 JP 2023008334
(71) Applicant: Mitsubishi Heavy Industries, Ltd., Tokyo 100-8332 (JP)
(72) Inventor: KOJIMA, Toru, Tokyo 100-8332 (JP); MORI, Satoshi, Tokyo 100-8332 (JP)
(74) Representative: Hoffmann Eitle
(86) International application number: PCT/JP2024/001863
(87) International publication number: WO 2024/157978

(57) **Abstract**

This ship-landing evaluation display system comprises a display unit for displaying a ship-landing evaluation map relating to the possibility of an aircraft landing on a ship, and a control unit for generating the ship-landing evaluation map and causing the same to be displayed by the display unit, wherein the ship-landing evaluation map is a map in which circumferential directions of concentric circles centered on the ship are taken as wave orientations, and radial directions centered on the ship are taken as ship speeds, and the control unit executes: a step for acquiring, in a prescribed external environment, an evaluation result in which the ship speed, the wave orientation, and an evaluation relating to the possibility of landing on the ship are associated with one another, and generating the ship-landing evaluation map on the basis of the acquired evaluation result; and a step for displaying the ship-landing evaluation map on the display unit.

## Description

### Technical Field

The present disclosure relates to a ship-landing evaluation display system and a ship-landing evaluation display method.

### Background Art

In the related art, a technique for guiding a vertical takeoff and landing aircraft to a landing target point is known. For example, PTL 1 discloses an automatic takeoff/landing system that calculates a positional relationship between a takeoff/landing target and a flying object based on an image of the takeoff/landing target acquired by an imaging device mounted on the flying object, and controls takeoff/landing of the flying object based on a calculation result.

### Citation List

### Patent Literature

[PTL 1] Japanese Unexamined Patent Application Publication No. 2012-071645

### Summary of Invention

### Technical Problem

Incidentally, in a case where an aircraft such as a vertical takeoff and landing aircraft is automatically guided to a landing target point, it is necessary to evaluate whether or not the aircraft has landing performance. In a case of performing such an evaluation, an inflight performance monitor (IFPM) that diagnoses a failure of a drive system and a control system of an aircraft is used.

A pilot who pilots an aircraft determines whether or not the aircraft can perform ship-landing from both a failure diagnosis result diagnosed by the IFPM and an operation response of the aircraft with respect to control stick input unit. However, since the determination of whether or not the aircraft can perform ship-landing depends on the determination of the pilot, it is difficult to easily determine the ship-landing of the aircraft.

Therefore, an object of the present disclosure is to provide a ship-landing evaluation display system and a ship-landing evaluation display method, with which it is possible to easily ascertain whether or not ship-landing can be performed by visual recognition.

### Solution to Problem

According to the present disclosure, there is provided a ship-landing evaluation display system including a display unit that displays a ship-landing evaluation map relating to ship-landing feasibility of an aircraft, and a control unit that generates the ship-landing evaluation map and causes the display unit to display the ship-landing evaluation map, in which the ship-landing evaluation map is a map in which a circumferential direction of concentric circles around the ship is a wave direction and a radial direction around the ship is a ship speed, and the control unit executes a step of acquiring an evaluation result in which the ship speed and the wave direction are associated with an evaluation relating to the ship-landing feasibility in a predetermined external environment and generating the ship-landing evaluation map based on the acquired evaluation result, and a step of displaying the ship-landing evaluation map on the display unit.

According to the present disclosure, there is provided a ship-landing evaluation display method executed by a ship-landing evaluation display system that displays a ship-landing evaluation map relating to ship-landing feasibility of an aircraft on a display unit, in which the ship-landing evaluation map is a map in which a circumferential direction of concentric circles around the ship is a wave direction and a radial direction around the ship is a ship speed, the method including a step of acquiring an evaluation result in which the ship speed and the wave direction are associated with an evaluation relating to the ship-landing feasibility in a predetermined external environment, and generating the ship-landing evaluation map based on the acquired evaluation result, and a step of displaying the ship-landing evaluation map on the display unit.

### Advantageous Effects of Invention

According to the present disclosure, it is possible to easily ascertain whether or not ship-landing can be performed by visual recognition.

### Brief Description of Drawings

Fig. 1 is a schematic configuration diagram showing an example of a ship-landing evaluation display system of an aircraft according to Embodiment 1.
Fig. 2 is an explanatory diagram relating to a ship-landing evaluation map.
Fig. 3 is an explanatory diagram relating to the ship-landing evaluation display control of the aircraft according to Embodiment 1.
Fig. 4 is a flowchart relating to a ship-landing evaluation display method of an aircraft according to Embodiment 1.
Fig. 5 is a schematic configuration diagram showing an example of a ship-landing evaluation display system of an aircraft according to Embodiment 2.
Fig. 6 is a flowchart relating to a ship-landing evaluation display method of the aircraft according to Embodiment 2.

### Description of Embodiments

Embodiments according to the present disclosure will be described in detail below with reference to the drawings. Note that this disclosure is not limited to the embodiment. In addition, components in the following embodiment include those that can be easily replaced by those skilled in the art or those that are substantially the same. Further, the components described below can be combined as appropriate, and in a case where there are a plurality of embodiments, the embodiments can also be combined.

### [Embodiment 1]

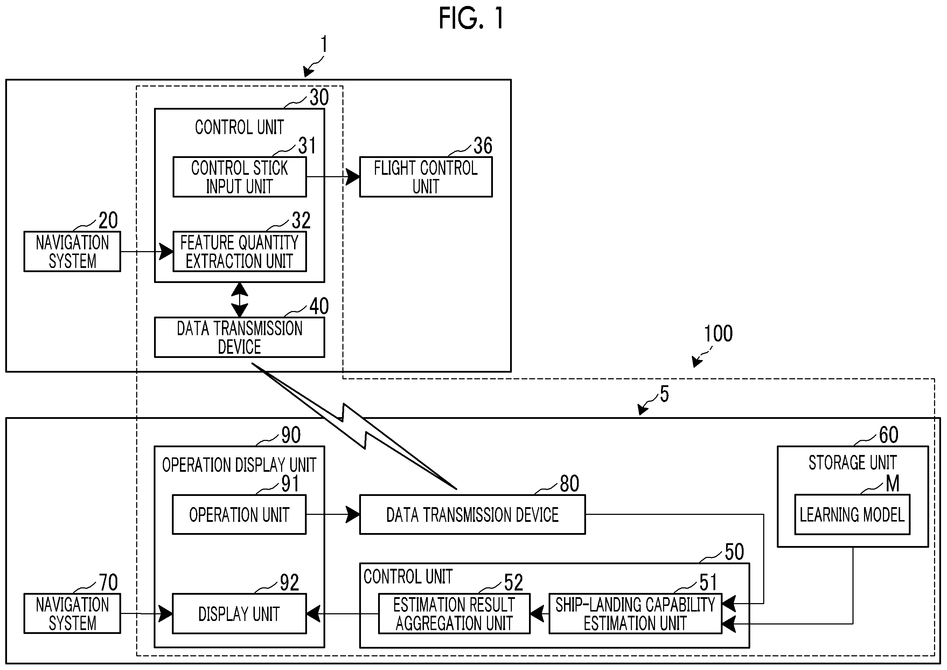

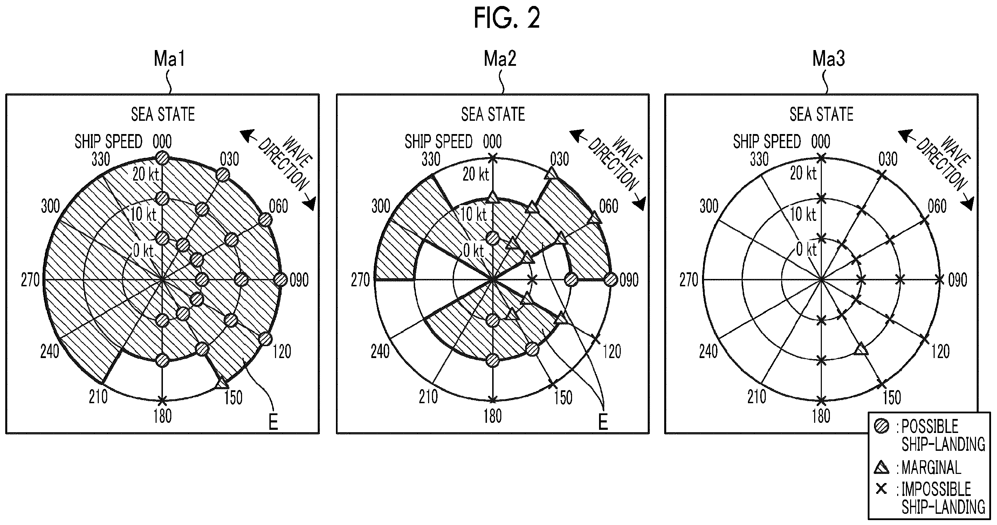

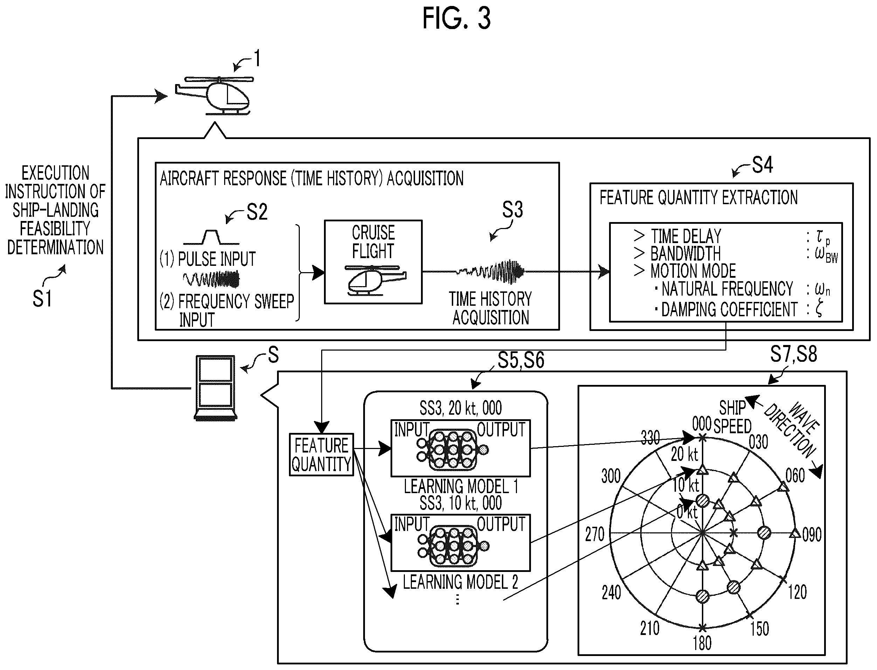

Fig. 1 is a schematic configuration diagram showing an example of a ship-landing evaluation display system of an aircraft according to Embodiment 1. Fig. 2 is an explanatory diagram relating to a ship-landing evaluation map. Fig. 3 is an explanatory diagram relating to the ship-landing evaluation display control of the aircraft according to Embodiment 1.

As shown in Figs. 1 and 3, the aircraft 1 is a flying object (for example, a helicopter, a drone, or the like) as a rotary wing aircraft. In Embodiment 1, the aircraft 1 is an unmanned vehicle. The aircraft 1 may be any flying object capable of moving forward, moving rearward, moving laterally, turning, and hovering, and may be a manned aircraft. The aircraft 1 is equipped with a part of the ship-landing evaluation display system 100, and the evaluation result regarding the ship-landing feasibility is displayed to the pilot of the aircraft 1 by the ship-landing evaluation display system 100. In addition, in Embodiment 1, the aircraft 1 is automatically landed on the ship as a form of the ship-landing. The aircraft 1 may be landed on the ship by a control stick input by the pilot as a form of the ship-landing. Hereinafter, in Embodiment 1, a case where the aircraft 1 automatically lands on the ship 5 will be described.

### (Ship-landing Evaluation Display System)

The ship-landing evaluation display system 100 according to Embodiment 1 is a system that evaluates whether or not the aircraft 1 can land on the ship 5 in order to land the aircraft 1 in flight on the ship 5, and displays the evaluation result. The ship-landing evaluation display system 100 is mounted on the aircraft 1 and the ship 5. As shown in Fig. 1, the aircraft 1 includes a navigation system 20, a control unit 30, a flight control unit 36, and a data transmission device 40. In addition, the ship 5 includes a control unit 50, a storage unit 60, a navigation system 70, a data transmission device 80, and an operation display unit 90. Then, the ship-landing evaluation display system 100 has the control unit 30 and the data transmission device 40 in the aircraft 1, and has the control unit 50, the storage unit 60, the data transmission device 80, and the operation display unit 90 in the ship 5. That is, in the ship-landing evaluation display system 100, the plurality of control units 30 and 50 cooperate with each other to determine the ship-landing feasibility, and display the evaluation result.

### (Ship)

As shown in Fig. 1, the ship 5 includes a control unit 50, a storage unit 60, a navigation system 70, a data transmission device 80, and an operation display unit 90.

The navigation system 70 is, for example, an inertial navigation system (INS) and acquires attitude angles in a pitch direction and a roll direction, a ship heading, a speed, an acceleration, position coordinates in the earth coordinate system, and the like of the ship 5. In Embodiment 1, the navigation system 70 is described as being applied to the inertial navigation system, but is not particularly limited, and any navigation system 70 may be used. In addition, in Embodiment 1, the navigation system 70 is an inertial navigation system including a global positioning system (GPS) as a position measurement unit in order to improve the measurement accuracy of the position. In Embodiment 1, the inertial navigation system including the GPS is applied and described. However, the present disclosure is not particularly limited to the GPS, and any position measurement unit capable of accurately measuring a position may be used. For example, a quasi-zenith satellite system may be used, and a configuration in which the position measurement unit such as the GPS is omitted may be used as long as the position can be accurately measured only by the navigation system 70. In addition, the navigation system 70 may acquire at least a part of various types of data by a sensor.

The data transmission device 80 is included in the ship-landing evaluation display system 100, and exchanges various signals with the data transmission device 40 mounted on the aircraft 1 via radio communication.

The operation display unit 90 is a user interface through which an operator who is a crew member of the ship 5 understands a control status and inputs various instructions. The operation display unit 90 includes an operation unit 91 and a display unit 92. The operation unit 91 is an input interface such as a keyboard and a touch panel, and outputs an execution instruction for the ship-landing feasibility determination, which will be described later, as various instructions. The display unit 92 is an output interface such as a display, and displays the evaluation result of the ship-landing feasibility determination, which will be described later. The instruction input in the operation display unit 90 is transmitted from the data transmission device 80 to the data transmission device 40. In addition, the control status of the aircraft 1 is transmitted from the data transmission device 40 to the data transmission device 80. That is, the data transmission device 40 and the data transmission device 80 can perform bidirectional communication.

The control unit 50 includes, for example, an integrated circuit such as a central processing unit (CPU). The control unit 50 estimates the ship-landing capability of the aircraft 1 based on the input data or outputs the evaluation result based on the estimation result to the display unit 92. The storage unit 60 is any storage device such as a semiconductor storage device or a magnetic storage device. The storage unit 60 stores a learning model M for estimating the ship-landing capability of the aircraft 1. The learning model M is, for example, a trained learning model trained by deep learning using training data. The learning model M is prepared according to the number of evaluation points of the ship-landing evaluation map to be described later, and is prepared according to a predetermined sea state.

In addition, the control unit 50 has a ship-landing capability estimation unit 51 and an estimation result aggregation unit 52. The ship-landing capability estimation unit 51 estimates the ship-landing capability of the aircraft 1 by using the learning model M stored in the storage unit 60 with the feature quantity (to be described later) as an input parameter. The estimation result aggregation unit 52 evaluates the ship-landing feasibility based on the estimation result of the ship-landing capability estimation unit 51, and generates a ship-landing evaluation map based on the evaluation result. Here, the ship-landing evaluation map will be described with reference to Fig. 2.

As shown in Fig. 2, the ship-landing evaluation map is generated according to a predetermined sea state which is an external environment. Although the sea state is applied as the external environment, the present disclosure is not particularly limited thereto, and different indexes such as wave height may be applied. In Fig. 2, the ship-landing evaluation maps are a ship-landing evaluation map Ma1, a ship-landing evaluation map Ma2, and a ship-landing evaluation map Ma3 in order from the left, and are ship-landing evaluation maps of different sea states. In Fig. 2, the sea state is a calm sea state on the left side and a severe sea state toward the right side. Specifically, the sea state is a wind and wave class standardized as WMO 3700, the ship-landing evaluation map Ma1 is a sea state 2, the ship-landing evaluation map Ma2 is a sea state 3, and the ship-landing evaluation map Ma3 is a sea state 4.

Each of the ship-landing evaluation maps Ma1 to Ma3 is a map in which the concentric circles around the ship 5 are the wave directions in the circumferential direction and the radial directions around the ship 5 are the ship speeds. The ship-landing evaluation maps Ma1 to Ma3 are oriented in the wave direction in which the phases are different by 30 degrees in the circumferential direction, and are obtained by changing the ship speed by 10 kt (knot) in the radial direction. In the ship-landing evaluation maps Ma1 to Ma3, the determination of the ship-landing feasibility is performed at a point (evaluation point) where the wave direction and the ship speed intersect. That is, in the ship-landing evaluation maps Ma1 to Ma3, the determination of the ship-landing feasibility is performed at 12 points in the circumferential direction and the determination of the ship-landing feasibility is performed at 0 kt, 10 kt, and 20 kt in the radial direction, so that the determination of the ship-landing feasibility is performed at a total of 36 evaluation points.

In addition, the evaluation regarding the ship-landing feasibility is performed in a plurality of stages between the possibility of the ship-landing and the impossibility of the ship-landing. Specifically, the evaluation of the ship-landing feasibility is evaluated in three stages of a possible ship-landing (circle), a conditionally feasible ship-landing (triangle: marginal), and an impossible ship-landing (cross) at each evaluation point as shown in Fig. 2. As for the marginal, there are conditions such as a condition where the wind state is calm as conditions.

Further, in the ship-landing evaluation maps Ma1 to Ma3, the possible ship-landing region E in which the ship speed and the wave direction evaluated as the possible ship-landing and the marginal are partitioned is displayed. The region where a possible ship-landing region E is a region partitioned by connecting the evaluation points evaluated as a possible ship-landing and marginal.

### (Aircraft)

As shown in Fig. 1, the aircraft 1 includes a navigation system 20, a control unit 30, a flight control unit 36, and a data transmission device 40.

The navigation system 20 is, for example, an inertial navigation system (INS), as in the navigation system 70. The navigation system 20 may be an inertial navigation system including a position measurement unit such as GPS, as in the navigation system 70, or may be an inertial navigation system excluding a position measurement unit such as GPS, and is not particularly limited.

The navigation system 20 including the GPS acquires the attitude angles of the aircraft 1 in the roll direction, the yaw direction, and the pitch direction, the aircraft speed, the inertial speed, the aircraft acceleration, the aircraft heading, the position coordinates in the earth coordinate system, and the like of the aircraft 1. The navigation system 20 may include an attitude angle sensor that detects an attitude angle of the aircraft 1, a speed sensor that detects an aircraft speed of the aircraft 1, an acceleration sensor that detects an aircraft acceleration of the aircraft 1, and a sensor that detects an aircraft heading of the aircraft 1. The navigation system 20 outputs the acquired attitude angle, aircraft speed, inertial speed, aircraft acceleration, aircraft heading, and position coordinates of the aircraft 1 to the flight control unit 36.

The control unit 30 includes, for example, an integrated circuit such as a central processing unit (CPU). The control unit 30 performs a control stick input for causing the aircraft 1 to execute a predetermined flight operation or extracts a feature quantity based on an operation response of the aircraft 1. The control unit 30 includes a control stick input unit 31 and a feature quantity extraction unit 32.

The control stick input unit 31 executes a predetermined control stick input in estimating the ship-landing capability of the aircraft 1. Specifically, the control stick input unit 31 outputs, as a control stick input for estimating the ship-landing capability of the aircraft 1, a control stick input related to pulse input and a control stick input related to frequency sweep input as operation signals to the flight control unit 36. The control stick input may be at least one of a control stick input related to pulse input and a control stick input related to frequency sweep input as long as the ship-landing capability can be estimated.

The feature quantity extraction unit 32 executes processing for extracting a feature quantity from the operation response of the aircraft 1 acquired by the navigation system 20. As an operation response, a time history of the flight operation of the aircraft 1 is acquired. The feature quantity is an input parameter input to the learning model M. Specifically, the feature quantity includes a response time delay τ_{P} of the attitude of the aircraft 1 with respect to the control stick input (operation signal), a bandwidth ω_{BW} of the frequency response of the aircraft 1 with respect to the control stick input, a natural frequency ωₙ of the frequency response of the aircraft 1 with respect to the control stick input, and a damping coefficient ζ of the frequency response of the aircraft 1 with respect to the control stick input. These feature quantities are used for a maneuverability evaluation criterion or the like.

The flight control unit 36 controls each part of the aircraft 1 to fly the aircraft 1. The flight control unit 36 controls the blade pitch angle, the rotation speed, and the like of each rotary wing according to the control amount corresponding to the control stick input, and adjusts the aircraft speed, the attitude angle, the change rate of the attitude angle, and the like of the aircraft 1. Accordingly, the aircraft 1 lands on the ship 5. In Embodiment 1, the control unit 30 and the flight control unit 36 are described as separate functional units. However, the control unit 30 and the flight control unit 36 may be a single functional unit.

The data transmission device 40 exchanges various signals with the data transmission device 80 mounted on the ship 5 via radio communication.

### (Ship-landing Evaluation Display Method)

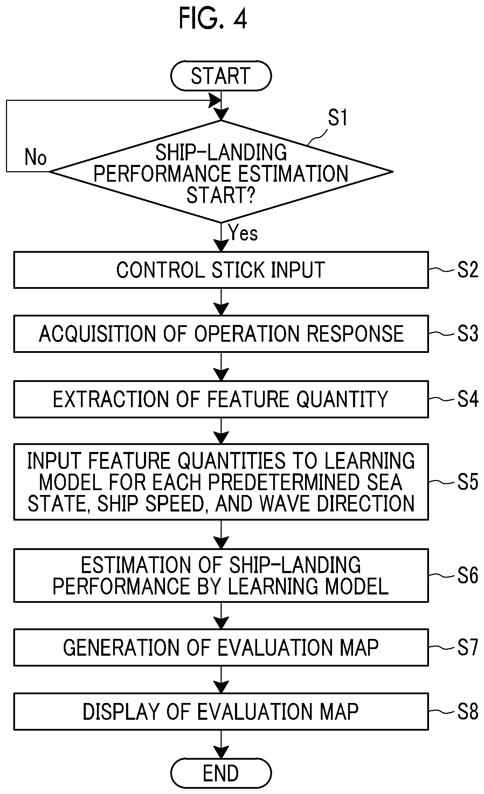

Next, a ship-landing evaluation display method of the aircraft 1 according to Embodiment 1 will be described with reference to Figs. 3 and 4. Fig. 4 is a flowchart relating to the ship-landing evaluation display method of an aircraft according to Embodiment 1. Hereinafter, a ship-landing evaluation display method in a case where the aircraft 1 automatically lands on the ship will be described.

In the ship-landing evaluation display method, first, in the ship-landing evaluation display system 100, it is determined whether or not to start the ship-landing performance estimation (step S1). In step S1, the control unit 30 of the aircraft 1 determines whether or not to start the ship-landing performance estimation, based on whether or not the control unit 30 has acquired the start signal relating to the execution instruction of the ship-landing feasibility determination, which is output from the operation unit 91 of the ship 5. In step S1, when the start signal for the ship-landing feasibility determination is output from the operation unit 91 of the ship 5, the start signal is output from the data transmission device 80 toward the aircraft 1. In step S1, when the control unit 30 of the aircraft 1 acquires the start signal via the data transmission device 40, it is determined that the ship-landing performance estimation is started (step S1: Yes). On the other hand, in step S1, when the control unit 30 of the aircraft 1 does not acquire the start signal, it is determined that the ship-landing performance estimation is not started (step S1: No). That is, the control unit 30 of the aircraft 1 repeatedly executes step S1 until the start signal is acquired.

Subsequently, in the ship-landing evaluation display method, when the control unit 30 of the aircraft 1 acquires the start signal, steps S2 to S3 of inputting the operation signal to the aircraft 1 and acquiring the operation response of the aircraft 1 are executed. Specifically, when the control unit 30 of the aircraft 1 acquires the start signal, the control stick input unit 31 of the control unit 30 executes the control stick input regarding the pulse input and the control stick input regarding the frequency sweep input toward the flight control unit 36 (step S2). In step S2, a control stick input is executed in the cruising state of the aircraft 1. In step S2, as the control stick input to be executed, at least one of a control stick input related to the pulse input and a control stick input related to the frequency sweep input may be executed. In addition, in step S2, the control stick input is executed in the cruising state of the aircraft 1. However, there is a case where the aircraft 1 enters the hovering state during a predetermined mission. Therefore, the control stick input may be executed in the hovering state. Thereafter, the control unit 30 acquires a time history that is an operation response corresponding to pulse input and a time history that is an operation response corresponding to frequency sweep input from the navigation system 20 (step S3).

Thereafter, in the ship-landing evaluation display method, the control unit 30 of the aircraft 1 extracts a feature quantity relating to the operation response of the aircraft 1 based on the acquired operation response (step S4). In step S4, the response time delay τ_{P} and the bandwidth ω_{BW} are acquired as the feature quantities extracted from the time history obtained by the pulse input. In addition, in step S4, the natural frequency ωₙ and the damping coefficient ζ are acquired as the feature quantities extracted from the time history obtained by the frequency sweep input. The above-described feature quantity may be extracted from any one of the pulse input and the frequency sweep input as long as the feature quantity can be extracted.

In the ship-landing evaluation display method, when the control unit 30 of the aircraft 1 acquires the extracted feature quantity, the control unit 30 outputs the acquired feature quantity from the data transmission device 40 toward the ship 5. When the control unit 50 of the ship 5 acquires the feature quantity via the data transmission device 80, the control unit 50 inputs the acquired feature quantity to the learning model M to estimate the ship-landing performance of the aircraft 1, and executes steps S5 to S7 of determining the landing feasibility based on the estimation result. Specifically, when the control unit 50 of the ship 5 acquires the feature quantity, the ship-landing capability estimation unit 51 of the control unit 50 inputs the acquired feature quantity to the learning model M stored in the storage unit 60 with the feature quantity as an input parameter (step S5). In step S5, the feature quantity is input to each of the plurality of learning models M corresponding to the predetermined sea state, the ship speed, and the wave direction. Then, the ship-landing capability estimation unit 51 acquires the ship-landing performance of the aircraft 1 as an estimation result output from the learning model M (step S6). In step S6, the estimation result of the ship-landing capability is acquired for each evaluation point of the ship-landing evaluation maps Ma1 to Ma3 corresponding to the predetermined sea state.

Thereafter, in the ship-landing evaluation display method, the control unit 50 of the ship 5 determines the ship-landing feasibility of the aircraft 1 based on the estimated ship-landing performance of the aircraft 1 in the estimation result aggregation unit 52, acquires the evaluation result, and generates the ship-landing evaluation maps Ma1 to Ma3 based on the evaluation result (step S7). In step S7, the control unit 30 determines whether or not the aircraft 1 can land on the ship, including the sea state, wind state, and the like, which are the external environment of the ship 5, in addition to the ship-landing performance of the aircraft 1. Then, the control unit 30 generates the ship-landing evaluation maps Ma1 to Ma3 shown in Fig. 2 from the acquired ship-landing feasibility evaluation results.

Then, in the ship-landing evaluation display method, the control unit 50 of the ship 5 displays the generated ship-landing evaluation maps Ma1 to Ma3 on the display unit 92 (step S8).

In addition, in a case where the ship 5 is a manned ship, the pilot of the aircraft 1 who has visually recognized the ship-landing evaluation maps Ma1 to Ma3 determines the heading of the ship 5 at the time of the ship-landing, in consideration of various situations, and performs automatic ship-landing of the aircraft 1. For example, in a case where the aircraft of the aircraft 1 is normal, even in a case where it is determined that the aircraft 1 is conditionally feasible for ship-landing (marginal) in a state where the heading of the ship 5 and the target direction of the ship 5 are made to coincide with each other at the time of landing on the ship, the automatic landing on the ship is performed. In addition, for example, in a case where the aircraft of the aircraft 1 is abnormal, even in a case where the target direction of the ship 5 and the heading of the ship 5 at the time of the ship-landing are different from each other, the automatic ship-landing is performed at the evaluation point where it is determined that the aircraft 1 is capable of the ship-landing (circle). In addition, the crew member of the ship 5 who has visually recognized the ship-landing evaluation maps Ma1 to Ma3 may determine the heading of the ship 5 at the time of ship-landing, in consideration of various situations, and may perform automatic ship-landing of the aircraft 1. Depending on the surrounding environment of the ship at the time of the ship-landing, the heading required for the ship in order for the aircraft 1 to be able to land on the ship may not coincide with the target direction to which the ship 5 needs to head, and a trade-off relationship may occur. In this case, for example, in a case where the aircraft of the aircraft 1 is normal, even in a case where the aircraft 1 is determined to be conditionally feasible for ship-landing (marginal), the automatic ship-landing can be performed and the ship-landing feasibility can be determined, and when there are possible conditions, the heading of the ship can be set to the target direction of the ship with the action of the ship being prioritized. In addition, for example, in a case where the aircraft of the aircraft 1 is abnormal, the course of the ship is determined with the safety of the ship-landing prioritized. A heading of the ship in which automatic ship-landing is possible is searched for, except for a case where the aircraft 1 is determined to be conditionally feasible for ship-landing (marginal), and a course of the ship at the time of ship-landing is determined with priority given to the safety of ship-landing.

In addition, in a case where the ship 5 is an unmanned ship, the pilot of the aircraft 1 who has visually recognized the ship-landing evaluation maps Ma1 to Ma3 determines the heading of the ship 5 at the time of ship-landing based on the state of the aircraft of the aircraft 1 and the target direction of the ship 5, and the control unit 50 of the ship 5 performs automatic ship-landing.

In Embodiment 1, the evaluation of the ship-landing feasibility at each evaluation point is performed using the learning model M. However, the present disclosure is not particularly limited to this configuration. When it is possible to evaluate the ship-landing feasibility at each evaluation point by other methods, the other methods may be applied.

### [Embodiment 2]

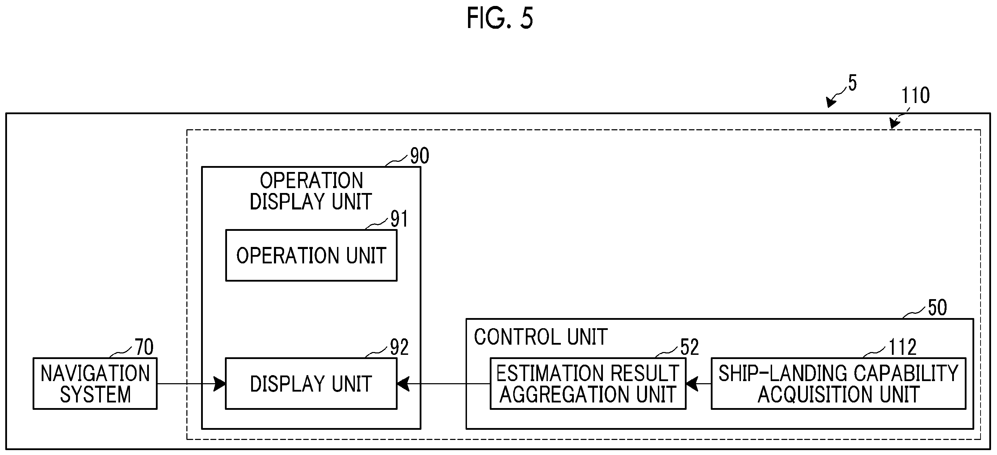

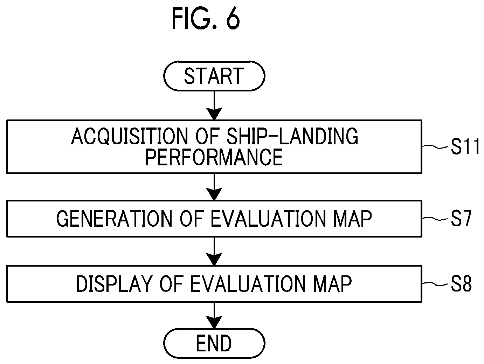

Next, Embodiment 2 will be described with reference to Figs. 5 and 6. Note that, in Embodiment 2, in order to avoid duplicate descriptions, portions that are different from those in Embodiment 1 will be described, and portions having the same configuration as those in Embodiment 1 will be denoted with the same reference numerals for description. Fig. 5 is a schematic configuration diagram showing an example of a ship-landing evaluation display system of an aircraft according to Embodiment 2. Fig. 6 is a flowchart relating to the ship-landing evaluation display method of an aircraft according to Embodiment 2.

### (Ship-landing Evaluation Display System)

The ship-landing evaluation display system 110 of Embodiment 2 acquires the evaluation of the ship-landing feasibility, generates the ship-landing evaluation maps Ma1 to Ma3, and displays the ship-landing evaluation maps Ma1 to Ma3 on the display unit 92. That is, the ship-landing evaluation display system 110 of Embodiment 2 is a system that omits the estimation of the ship-landing capability using the learning model M, as in the ship-landing evaluation display system 100 of Embodiment 1, and is a system that is mounted only on the ship 5 side. Therefore, the ship-landing evaluation display system 110 of Embodiment 2 includes the control unit 50 and the operation display unit 90.

The control unit 50 includes a ship-landing capability acquisition unit 112 instead of the ship-landing capability estimation unit 51 of Embodiment 1, and the estimation result aggregation unit 52 is the same as in Embodiment 1. The ship-landing capability acquisition unit 112 acquires the ship-landing capability of the aircraft 1. The ship-landing capability of the aircraft 1 is acquired in response to a predetermined sea state, ship speed, and wave direction. The acquired ship-landing capability of the aircraft 1 is evaluated by a predetermined evaluation method. That is, the evaluation method of the ship-landing capability of the aircraft 1 is not particularly limited, and any evaluation method may be used. The estimation result aggregation unit 52 evaluates the ship-landing feasibility based on the ship-landing capability of the aircraft 1 acquired in the ship-landing capability acquisition unit 112, and generates the ship-landing evaluation maps Ma1 to Ma3 based on the evaluation result.

### (Ship-landing Evaluation Display Method)

Next, a ship-landing evaluation display method of the aircraft 1 according to Embodiment 2 will be described with reference to Fig. 6. In the ship-landing evaluation display method of Embodiment 2, first, the control unit 50 of the ship 5 acquires the ship-landing capability of the aircraft 1 in the ship-landing capability acquisition unit 112 (step S11). In step S11, the estimation result of the ship-landing capability is acquired for each evaluation point of the ship-landing evaluation maps Ma1 to Ma3 corresponding to the predetermined sea state.

Thereafter, in the ship-landing evaluation display method, steps S7 and S8 similar to those in Embodiment 1 are executed. That is, in the ship-landing evaluation display method, the control unit 50 of the ship 5 determines ship-landing feasibility of the aircraft 1, based on the ship-landing performance of the aircraft 1 acquired in the ship-landing capability acquisition unit 112, acquires an evaluation result, and generates the ship-landing evaluation maps Ma1 to Ma3 based on the evaluation result (step S7). Then, in the ship-landing evaluation display method, the control unit 50 of the ship 5 displays the generated ship-landing evaluation maps Ma1 to Ma3 on the display unit 92 (step S8).

As described above, the following can be understood as the ship-landing evaluation display system 100 and the ship-landing evaluation display method according to Embodiments 1 and 2.

A ship-landing evaluation display system 100 according to a first aspect includes a display unit 92 that displays ship-landing evaluation maps Ma1 to Ma3 relating to ship-landing feasibility of an aircraft 1 on a ship 5, and a control unit 50 that generates the ship-landing evaluation maps Ma1 to Ma3 and causes the display unit 92 to display the ship-landing evaluation maps Ma1 to Ma3, in which the ship-landing evaluation maps Ma1 to Ma3 are maps in which a concentric circles around the ship 5 is a wave direction and a radial direction around the ship 5 is a ship speed, and the control unit 50 executes step S7 of acquiring an evaluation result in which the ship speed and the wave direction are associated with an evaluation relating to the ship-landing feasibility in a predetermined external environment and generating the ship-landing evaluation maps Ma1 to Ma3 based on the acquired evaluation result, and step S8 of displaying the ship-landing evaluation maps Ma1 to Ma3 on the display unit 92.

According to this configuration, in a predetermined external environment, the ship-landing evaluation maps Ma1 to Ma3 in which the ship speed and the wave direction are associated with the evaluation regarding the ship-landing feasibility can be visually recognized, so that it is possible to easily ascertain whether or not the ship-landing can be performed.

According to a second aspect, in the ship-landing evaluation display system 100 according to the first aspect, the evaluation relating to the ship-landing feasibility is performed in a plurality of stages between possibility of the ship-landing and impossibility of the ship-landing.

According to this configuration, it is possible to evaluate the ship-landing feasibility in detail.

According to a third aspect, in the ship-landing evaluation display system 100 according to the first or second aspect, in step S8 of displaying the ship-landing evaluation maps Ma1 to Ma3 on the display unit 92, a region in which the ship speed and the wave direction evaluated as possibility of the ship-landing are partitioned is displayed as a possible ship-landing region E on the ship-landing evaluation maps Ma1 to Ma3.

According to this configuration, the ship speed and the wave direction that allow ship-landing can be understood as a region.

According to a fourth aspect, the ship-landing evaluation display system 100 according to any one of the first to third aspects further includes a storage unit 60 that stores a learning model M for estimating a ship-landing performance of the aircraft 1, in which the storage unit 60 stores a plurality of the learning models M associated with the ship speed and the wave direction in a predetermined external environment, the control units 30 and 50 further execute step S2 to S3 of acquiring an operation response of the aircraft 1 that is operated by inputting an operation signal to the aircraft 1, step S4 of extracting a feature quantity relating to the operation response of the aircraft 1 based on the acquired operation response, and step S5 to S6 of inputting the extracted feature quantity to each of the plurality of learning models M to estimate the ship-landing performance of the aircraft 1, and in step S8 of displaying the ship-landing evaluation maps Ma1 to Ma3 on the display unit 92, the evaluation result is acquired based on the estimated ship-landing performance of the aircraft 1.

According to this configuration, the feature quantity extracted from the operation response of the aircraft 1 is used as the input parameter of the learning model M, so that the ship-landing performance of the aircraft 1 can be accurately estimated, and thus it is possible to accurately evaluate the ship-landing feasibility of the aircraft 1.

A ship-landing evaluation display method according to a fifth aspect is a ship-landing evaluation display method executed by a ship-landing evaluation display system 100 that displays ship-landing evaluation maps Ma1 to Ma3 relating to ship-landing feasibility of an aircraft on a display unit 92, in which the ship-landing evaluation maps Ma1 to Ma3 are maps in which a circumferential direction of concentric circles around the ship 5 is a wave direction and a radial direction around the ship 5 is a ship speed, the method including: step S7 of acquiring an evaluation result in which the ship speed and the wave direction are associated with an evaluation relating to the ship-landing feasibility in a predetermined external environment and generating the ship-landing evaluation map based on the acquired evaluation result; and step S8 of displaying the ship-landing evaluation map Ma1 to Ma3 on the display unit 92.

According to this configuration, in a predetermined external environment, the ship-landing evaluation maps Ma1 to Ma3 in which the ship speed and the wave direction are associated with the evaluation regarding the ship-landing feasibility can be visually recognized, so that it is possible to easily ascertain whether or not the ship-landing can be performed.

### Reference Signs List

1: aircraft
5: ship
20: navigation system
30: control unit
31: control stick input unit
32: feature quantity extraction unit
36: flight control unit
40: data transmission device
50: control unit
51: ship-landing capability estimation unit
52: estimation result aggregation unit
60: storage unit
70: navigation system
80: data transmission device
90: operation display unit
91: operation unit
92: display unit
100, 110: ship-landing evaluation display system
112: ship-landing capability acquisition unit
M: learning model
Ma1 to Ma3: ship-landing evaluation map

## Claims

1. A ship-landing evaluation display system comprising:
a display unit that displays a ship-landing evaluation map relating to ship-landing feasibility of an aircraft; and
a control unit that generates the ship-landing evaluation map and causes the display unit to display the ship-landing evaluation map,
wherein the ship-landing evaluation map is a map in which a circumferential direction of concentric circles around the ship is a wave direction and a radial direction around the ship is a ship speed, and
the control unit executes
a step of acquiring an evaluation result in which the ship speed and the wave direction are associated with an evaluation relating to the ship-landing feasibility in a predetermined external environment and generating the ship-landing evaluation map based on the acquired evaluation result, and
a step of displaying the ship-landing evaluation map on the display unit.

2. The ship-landing evaluation display system according to claim 1,
wherein the evaluation relating to the ship-landing feasibility is performed in a plurality of stages between possibility of the ship-landing and impossibility of the ship-landing.

3. The ship-landing evaluation display system according to claim 1,
wherein in the step of displaying the ship-landing evaluation map on the display unit, a region in which the ship speed and the wave direction evaluated as possibility of the ship-landing are partitioned is displayed as a possible ship-landing region on the ship-landing evaluation map.

4. The ship-landing evaluation display system according to claim 1, further comprising:
a storage unit that stores a learning model for estimating a ship-landing performance of the aircraft,
wherein the storage unit stores a plurality of the learning models associated with the ship speed and the wave direction in a predetermined external environment,
the control unit further executes
a step of acquiring an operation response of the aircraft that is operated by inputting an operation signal to the aircraft,
a step of extracting a feature quantity relating to the operation response of the aircraft based on the acquired operation response, and
a step of inputting the extracted feature quantity to each of the plurality of learning models to estimate the ship-landing performance of the aircraft, and
in the step of displaying the ship-landing evaluation map on the display unit, the evaluation result is acquired based on the estimated ship-landing performance of the aircraft.

5. A ship-landing evaluation display method executed by a ship-landing evaluation display system that displays a ship-landing evaluation map relating to ship-landing feasibility of an aircraft on a display unit, in which the ship-landing evaluation map is a map in which a circumferential direction of concentric circles around the ship is a wave direction and a radial direction around the ship is a ship speed, the method comprising:
a step of acquiring an evaluation result in which the ship speed and the wave direction are associated with an evaluation relating to the ship-landing feasibility in a predetermined external environment, and generating the ship-landing evaluation map based on the acquired evaluation result; and
a step of displaying the ship-landing evaluation map on the display unit.
